# EUROPEAN PATENT APPLICATION

(11) **EP 4 566 705 A1**
(43) Date of publication of application: **11.06.2025**
(21) Application number: 24217688.1
(22) Date of filing: 05.12.2024
(51) Int. Cl.: B01J 8/02, B01J 8/04

(54) **GAS DISTRIBUTION SYSTEM AND AMMONIA SYNTHESIS SYSTEM USING THE SAME**

(30) Priority: 06.12.2023 KR 20230175501
(71) Applicant: SK Innovation Co., Ltd., Seoul 03188 (KR)
(72) Inventor: LEE, Jun Young, 34124 Daejeon (KR); SONG, Da Eun, 34124 Daejeon (KR); IM, Ju Hwan, 34124 Daejeon (KR); JEONG, Jae Hun, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

Provided are a gas distribution system for an ammonia synthesis system, the gas distribution system comprising: three or more distribution plates disposed upstream from a catalyst bed disposed inside an ammonia synthesis reactor of the ammonia synthesis system; three or more distribution devices, each disposed upstream from a corresponding one of the distribution plates for distributing a mixed gas to the distribution plates; and three or more mixed gas supply lines, each arranged to supply the mixed gas to a respective one of the distribution devices, wherein the three or more distribution plates have different opening ratios.

## Description

### TECHNICAL FIELD

The present disclosure relates generally to a gas distribution system for an ammonia synthesis system and an ammonia synthesis system using the same, and to a method for synthesizing ammonia in an ammonia synthesis system.

### BACKGROUND

There is an increasing need for renewable energy to achieve a greenhouse gas reduction to cope with climate change and depletion of oil resources. However, regions that meet an appropriate condition for renewable energy production are scattered, and it is thus essential to find out ways to store and transport renewable energy. For example, renewable energy, which is abundant in the equatorial and southern hemisphere regions, is required to be transported to the northern hemisphere where renewable energy is in high demand.

In addition, renewable energy is not stable and may vary from time to time. Due to its rather high temporal variability, effective use of renewable energy requires the storage devices for storing electricity produced from renewable power sources. Ammonia is spotlighted as an energy carrier to solve the problems occurring from the area ubiquity and temporal variability of renewable energy. In particular, ammonia may be liquefied at room temperature and at pressures of 8.5 atmospheres or higher, and thus may be stored and transported more easily than hydrogen. Therefore, as an alternative to solve the problems occurring from the area ubiquity and temporal variability of renewable energy, a method of synthesizing ammonia is being developed, which is produced from hydrogen and nitrogen using electricity produced from renewable energy.

For example, hydrogen, one of the main raw materials for the ammonia synthesis, may be produced by a water electrolyzer powered by renewable energy such as solar or wind energy. One issue that needs to be addressed is that renewable energy, such as, for example, solar energy or wind energy is not constant or available at all times. Therefore, the amount of hydrogen (e.g., flow rate) provided by a process using renewable solar or wind energy may vary or fluctuate significantly and, hence, an ammonia synthesis system using such hydrogen cannot be operated at a constant flow rate. Such changes may have a negative impact on the overall efficiency of the ammonia synthesis system.

In addition, a flow rate distribution at the front end of a catalyst bed included in an ammonia synthesis reactor may get more and more less uniform when a flow rate of the raw material such as hydrogen fed into the ammonia synthesis system decreases or increases.

In addition, in a conventional ammonia synthesis system, temperature deviation may occur between the central and outer parts of the catalyst bed especially at the beginning of its operation, which may reduce an ammonia synthesis yield.

Therefore, there is a need for an ammonia synthesis system which can operate efficiently with hydrogen from a renewable energy process. The ammonia synthesis system will need to be able to cope with the changes in the flow rate that occur during the production cycle, while at the same time solving the problems of the non-uniform flow rate distribution that occurs at the front end of the catalyst bed and the reduced ammonia synthesis yield caused by the temperature deviation in the central and outer parts of the catalyst bed at the beginning of the operation.

### SUMMARY

An embodiment of the present disclosure relates to a gas distribution system for an ammonia synthesis system and an ammonia synthesis system using the same, which operate efficiently against changes in a flow rate that may occur during a production cycle.

Another embodiment of the present disclosure relates to a gas distribution system for an ammonia synthesis system and the ammonia synthesis system using the same, which may maintain a uniform flow rate distribution at the front end of a catalyst bed included in an ammonia synthesis reactor even when a flow rate of a raw material, such as hydrogen, fed into an ammonia synthesis system is decreased, in particular if the decrease in flow rate is substantial.

Another embodiment of the present disclosure relates to a gas distribution system for an ammonia synthesis system and an ammonia synthesis system using the same, which may enable uniform and efficient ammonia synthesis reaction by minimizing a load on a gas supply to a catalyst bed included in an ammonia synthesis reactor even when a flow rate of a raw material, such as hydrogen, is fed into the ammonia synthesis system is increased, in particular if the mentioned flow rate is increased substantially.

Still another embodiment of the present disclosure relates to an ammonia synthesis system which may improve an ammonia synthesis yield by enabling a temperature in the central and in outer parts of a catalyst bed to be uniform, in particular at the beginning of its operation.

An embodiment of the present disclosure relates to an ammonia synthesis system which may improve an ammonia synthesis yield at the beginning of its operation by preheating a catalyst bed before the beginning of its operation.

According to one embodiment of the present disclosure, an ammonia synthesis system is provided including an improved gas distribution system for an ammonia synthesis reactor, wherein the ammonia synthesis system includes an ammonia synthesis reactor; a catalyst bed included in the ammonia synthesis reactor; three or more distribution plates disposed upstream from the catalyst bed; a distribution device disposed upstream from each of the distribution plates for distributing mixed gas to the distribution plate; and mixed gas supply lines arranged to supply mixed gas to the respective distribution devices, wherein the three or more distribution plates include the lower distribution plate, the middle distribution plate, and the upper distribution plate, which are distinguished from one another based on their arrangement heights, each of the lower distribution plate, the middle distribution plate, and the upper distribution plate has a plurality of openings formed independently of each other, and when a percentage of a total area of the openings to a total area of each distribution plate is referred to as an opening ratio, an opening ratio A_{b} of the lower distribution plate, an opening ratio Aₘ of the middle distribution plate, and an opening ratio Aₜ of the upper distribution plate satisfy A_{b} > Aₘ > Aₜ.

In one embodiment, provided is a gas distribution system for an ammonia synthesis system, the gas distribution system comprising: three or more distribution plates disposed upstream from a catalyst bed disposed inside an ammonia synthesis reactor of the ammonia synthesis system; three or more distribution devices, each disposed upstream from a corresponding one of the distribution plates for distributing a mixed gas to the distribution plates; and three or more mixed gas supply lines, each arranged to supply the mixed gas to a respective one of the distribution devices, wherein the three or more distribution plates include a lower distribution plate, a middle distribution plate, and an upper distribution plate, which are distinguished from one another based on their arrangement heights, wherein each of the lower distribution plate, the middle distribution plate, and the upper distribution plate has a plurality of openings formed independently of each other, wherein when a percentage of a total area of the openings to a total area of each distribution plate is referred to as an opening ratio, and wherein an opening ratio A_{b} of the lower distribution plate, an opening ratio Aₘ of the middle distribution plate, and an opening ratio Aₜ of the upper distribution plate satisfy the relationship A_{b} > Aₘ > Aₜ.

The opening ratio A_{b} of the lower distribution plate may be more than 40%, and/or
the opening ratio Aₘ of the middle distribution plate may be 20 to 40%, and/or.
the opening ratio Aₜ of the upper distribution plate may be less than 20%.

The system may further include a plurality of mixed gas flow pipes which are fixed to a lower surface of at least one of the distribution plates and through which the mixed gas flows.

The mixed gas flow pipe may have a bottom surface and a side surface connecting the bottom surface with the distribution plate, a plurality of upper apertures may be formed in a side surface of an upper part of the mixed gas flow pipe spaced apart from each other along a circumference of the pipe, a plurality of middle apertures may be formed in a side surface of a middle part of the mixed gas flow pipe spaced apart from each other along the circumference, a plurality of lower apertures may be formed in a side surface of a lower part of the mixed gas flow pipe spaced apart from each other along the circumference, and optaionlly the mixed gas flow pipe may include a side cover (or simply cover) surrounding at least some regions of the side surface of the mixed gas flow pipe to provide a space for a fluid flowing out of the side surface of the mixed gas flow pipe after passing through the upper aperture to be guided toward the middle aperture. Optionally the mixed gas flow pipe further includes a separator plate dividing the upper and middle parts of the mixed gas flow pipe from each other

The system may further include a microwave heating device for emitting microwaves to the catalyst bed, and optionally include a microwave guide for enabling the microwave to reach the catalyst bed more efficiently.

Each of the mixed gas supply lines may include a flow regulating device.

The system may further include a heat exchanger disposed downstream from the catalyst bed to remove heat from an effluent of the catalyst bed.

The distribution device may have a disk shape or a toroidal shape.

In another embodiment, provided is an ammonia synthesis system using the gas distribution system described above.

The system may further include a backflow prevention plate disposed at the bottom of each of the distribution plates.

The gas distribution system according to an embodiment may further include the backflow prevention plate including the backflow prevention cap, thereby preventing the backflow of the mixed gas to the middle distribution plate when the mixed gas is fed through the mixed gas supply line disposed at the bottom for the gas to pass through only the lower distribution plate.

An ammonia synthesis system including the gas distribution system according to the gas distribution system.

In another embodiment, provided is a method for synthesizing ammonia using the ammonia synthesis system.

In the method, the ammonia synthesis system may be adjusted at 10 to 300 bar and/or at 200 to 700°C.

The method for synthesizing ammonia with the high yield comprises a step that the catalyst bed (20) is preheated before the beginning of the system operation.

The method for synthesizing ammonia with the high yield comprises steps that wherein a raw material is fed through the lower mixed gas supply line (50), when the raw material fed into the system has a flow rate more than twice (200%) of the annual average production flow rate (100%), and
wherein a raw material is fed through the upper mixed gas supply line (52) to first pass through the upper distribution plate (32) disposed at the top of the reactor (10), when the flow rate of the raw material is less than half (50%) of an annual average production flow rate (100%).

In another embodiment, provided is an ammonia synthesis system, the system comprising: an ammonia synthesis reactor; a catalyst bed included in the ammonia synthesis reactor; three or more distribution plates disposed upstream from a catalyst bed disposed inside the ammonia synthesis reactor of the ammonia synthesis system; three or more distribution devices, each disposed upstream from a corresponding one of the distribution plates for distributing a mixed gas to the distribution plates; and three or more mixed gas supply lines, each arranged to supply the mixed gas to a respective one of the distribution devices, wherein the three or more distribution plates include a lower distribution plate, a middle distribution plate, and an upper distribution plate, which are distinguished from one another based on their arrangement heights, wherein each of the lower distribution plate, the middle distribution plate, and the upper distribution plate has a plurality of openings formed independently of each other, wherein when a percentage of a total region of the openings to a total region of each distribution plate is referred to as an opening ratio, and wherein an opening ratio A_{b} of the lower distribution plate, an opening ratio Aₘ of the middle distribution plate, and an opening ratio Aₜ of the upper distribution plate satisfy the relationship A_{b} > Aₘ > Aₜ.

Other aspects, features, and advantages of the embodiments of the present disclosure will become apparent to those with ordinary skill in the art from the detailed description of examples and embodiments of the invention in conjunction with the following drawings.

### BRIEF DESCRIPTION OF THE DRAWINGS

FIG. 1 is a schematic side cross-sectional view showing a gas distribution system and an ammonia synthesis system according to an embodiment of the present disclosure.
FIG. 2 is a schematic side cross-sectional view showing a gas distribution system and an ammonia synthesis system according to an embodiment of the present disclosure.
FIG. 3 is a perspective view showing a lower distribution plate and a mixed gas flow pipe according to an embodiment of the present disclosure.
FIG. 4 is a perspective view showing the inside of the mixed gas flow pipe according to an embodiment of the present disclosure.
FIG. 5 is a perspective view showing the inside of a mixed gas flow pipe according to another embodiment of the present disclosure.
FIG. 6 is a perspective view showing a middle distribution plate according to an embodiment of the present disclosure.
FIG. 7 is a perspective view showing a upper distribution plate according to an embodiment of the present disclosure.

### DETAILED DESCRIPTION

Various advantages and features of the present disclosure and methods for accomplishing the same will become apparent to the skilled person of the art from the embodiments and examples described in detail below. However, it is noted that the embodiments of the present disclosure are not limited only to the embodiments and examples disclosed below, and may be implemented in various different forms. These embodiments and examples are provided only for making the present disclosure complete and for allowing those skilled in the art to fully appreciate the scope of the present disclosure.

Unless defined otherwise, all terms (including technical and scientific terms) used in the specification have the same meanings as meanings commonly understood by those skilled in the art to which the present disclosure pertains.

Terms of a singular number used in the specification may be interpreted as including its plural number unless otherwise indicated.

A numerical range used in the specification may include the lower and upper limits and all values within that range, increments logically derived from the shape and width of the defined range, all values delimited by those limits, and all possible combinations of the upper and lower limits of a numerical range delimited by different shapes. The defined numerical range may also include values outside the numerical range, which may occur due to experimental errors or rounding of values unless otherwise specified in the specification.

A term "to include" or "to comprise" in the specification is a comprehensive description that has the meaning equivalent to an expression such as "to comprise", "to include", "to contain", "to have", or "to be featured", and does not exclude an element, a material, or a process that is not additionally enumerated.

The terms "upper", "middle" and "lower" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification without special mention may indicate % by weight.

In the specification, "A to B" indicates "A or more and B or less" unless otherwise specifically defined.

When an element such as a layer, a film, a region, or a board is referred to as being "on" or "above" another element in the specification, the element may be "directly on" another element or may have a third element interposed therebetween.

When a component such as a layer, a film, a region, a board, or a member is referred to as being on "one surface" or "one side" of another component in the specification, the component may be in direct contact with another component or may have a third component interposed therebetween.

Hereinafter, a gas distribution system of the present disclosure and an ammonia synthesis system using the same are described in detail. However, the embodiments are only illustrative, and the present disclosure is not limited to the specific embodiments described.

According to an embodiment of the present disclosure an ammonia synthesis system includes an ammonia synthesis reactor; a catalyst bed included in the ammonia synthesis reactor; three or more distribution plates disposed upstream from the catalyst bed; a distribution device disposed upstream from each of the distribution plates for distributing mixed gas to the distribution plate; and mixed gas supply lines arranged to supply mixed gas to the respective distribution devices.

In the gas distribution system according to one embodiment, the three or more distribution plates may include the lower distribution plate, the middle distribution plate, and the upper distribution plate, which are distinguished from one another based on their arrangement heights, each of the lower distribution plate, the middle distribution plate, and the upper distribution plate may have a plurality of openings formed independently of each other, and when a percentage of a total area of the openings to a total area of each distribution plate is referred to as an opening ratio, an opening ratio A_{b} of the lower distribution plate, an opening ratio Aₘ of the middle distribution plate, and an opening ratio Aₜ of the upper distribution plate may satisfy A_{b} > Aₘ > Aₜ.

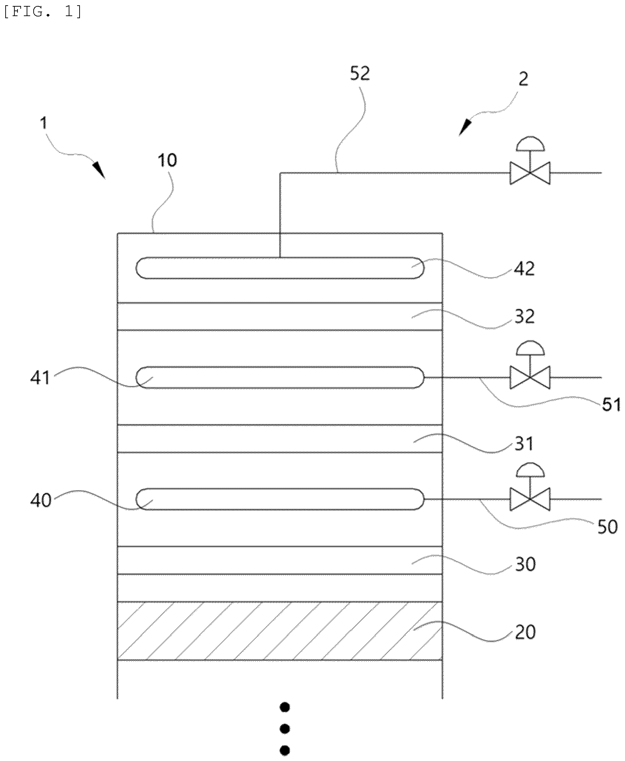

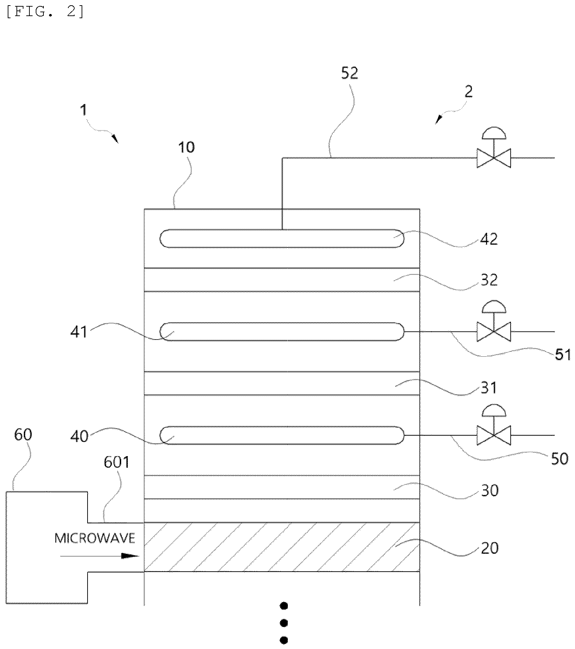

Referring to FIGS. 1 and 2, according to an embodiment of the present disclosure, provided are a gas distribution system 1 for an ammonia synthesis reactor, and an ammonia synthesis system 2 using the same, the gas distribution system 1 including an ammonia synthesis reactor 10; a catalyst bed 20 included in the ammonia synthesis reactor 10; three or more distribution plates 30, 31, and 32 disposed upstream from the catalyst bed; a distribution device 40, 41, or 42 disposed upstream from each of the distribution plates 30, 31, and 32 for distributing the mixed gas to the distribution plate 30, 31, or 32; and mixed gas supply lines 50, 51, and 52 arranged to supply the mixed gas to the distribution devices 40, 41, and 42, wherein the three or more distribution plates 30, 31, and 32 include the lower distribution plate 30, the middle distribution plate 31, and the upper distribution plate 32, which are distinguished from one another based on their arrangement heights, and each of the lower distribution plate 30, the middle distribution plate 31, and the upper distribution plate 32 has a plurality of openings 301, 311, and 321 formed independently of each other.

Hereinafter, the gas distribution system including three or more distribution plates may be described as an embodiment of the gas distribution system for an ammonia synthesis reactor according to the present disclosure. The gas distribution system and the ammonia synthesis system using the same according to an embodiment of the present disclosure may include three or more, for example, three, four, five, six, seven, eight, nine or ten distribution plates.

The gas distribution system and the ammonia synthesis system using the same according to an embodiment of the present disclosure operates efficiently against changes in a flow rate that may occur during a production cycle by including the mixed gas supply line to supply the mixed gas to the upstream from each of the three or more distribution plates. The distribution plates may have different opening ratios. For example, when a raw material fed into the system has a high flow rate, the raw material may be fed through the mixed gas supply line 50 disposed at the lowermost part for the mixed gas to pass through only the lower distribution plate 30 disposed at the lowermost part of the distribution plates and to reach the catalyst bed 20. In another example, when the raw material feed has a low flow rate, the system may be operated by feeding the mixed gas through the mixed gas supply line 52 disposed at the top for the gas to first pass through the upper distribution plate 32 disposed at the top of the reactor 10, then sequentially pass through the middle distribution plate 31 and then the lower distribution plate 30, and reach the catalyst bed 20 which is below the lower distribution plate 30.

Here, in the specification, the degree of the flow rate during the production cycle may be classified into three categories for convenience. As described above, the flow rate may be classified into cases of a low flow rate, a medium flow rate, and a high flow rate. However, the change in the flow rate may be easily regulated by the common sense or judgment of those skilled in the art. The low flow rate case indicates a case where the flow rate is less than half (50%) of an annual average production flow rate (100%), the medium flow rate case indicates a case where the flow rate is half (50%) or more and less than twice (200%) of the annual average production flow rate (100%), and the high flow rate case indicates a case where the flow rate is more than twice (200%) of the annual average production flow rate (100%), but the embodiments are not limited thereto.

In general, when a reaction fluid, e.g., a raw material has a low flow rate, distribution of the raw material at the catalyst bed may be not uniform, which may cause a difference in reaction performance among the catalyst disposed at the same height of the reactor and at different regions of the catalyst bed. That is, the raw material may not be distributed uniformly in the various regions of a catalyst bed. As a result, a catalyst bed replacement cycle may become shorter as the reaction performances in some regions of the catalyst bed are reduced due to the non-uniform distribution caused by the reduced flow rate.

The present invention, solves this issue, because when the raw material flow rate is low as described above, the gas distribution system allows the mixed gas to pass through the upper, middle, and lower distribution plates having the different opening ratios and to reach the catalyst bed resulting in thus maintaining a uniform flow rate distribution at the front end of the catalyst bed, thereby effectively solving a conventional problem that the raw material fails to be distributed uniformly at the front end of the catalyst bed. Alternatively, when the flow rate is high as above, the gas distribution system may allow the mixed gas to pass through only the lower distribution plate having the largest opening ratio to thus minimize a load on the gas supply to the catalyst bed, thereby achieving the gas distribution system and the ammonia synthesis system using the same, which enables a uniform and efficient reaction.

In an embodiment according to the present disclosure, the number of distribution plates may be three or more, four or more, five or more, six or more, seven or more, eight or more, nine or more, ten or more, twenty or fewer, ten or fewer, nine or fewer, eight or fewer, seven or fewer, six or fewer, five or fewer, four or fewer, with a lower limit of three, or a value between these values. The number of distribution plates and the number of the distribution devices may be the same.

The three or more distribution plates may include the lower distribution plate, the middle distribution plate, and the upper distribution plate, which are distinguished from one another based on their arrangement height, or based on their longitudinal position. The lower distribution plate, the middle distribution plate, and the upper distribution plate are arranged at a different height within the reactor 10. For example, the lower distribution plate may be positioned at a lower height, the middle distribution plate at a medium height, and the upper distribution plate at a higher height within the reactor 10. The lower, medium, and upper distribution plates may each have a plurality of openings formed independently of each other. The percentage of the total area of the openings to the total area of each distribution plate is referred to as the opening ratio. The lower distribution plate, the middle distribution plate, and the upper distribution plate may have different opening ratios. For example, the opening ratio A_{b} of the lower distribution plate, the opening ratio Aₘ of the middle distribution plate, and the opening ratio Aₜ of the upper distribution plate may satisfy the relationship A_{b} > Aₘ > Aₜ.

In the gas distribution system according to an embodiment of the present disclosure, the lower distribution plate 30, the middle distribution plate 31, and the upper distribution plate 32 may have the opening ratios sequentially increased toward the lower part based on the arrangement heights, thereby coping with the change in the flow rate occurring during the production cycle. If the number of distribution plates increases to more than three, the opening ratios may increases sequentially toward the lower part based on the arrangement heights of the distribution plates.

The lower distribution plate 30 may have the plurality of lower distribution plate openings 301. The percentage of the total area of the lower distribution plate openings 301 to the total area of the lower distribution plate 30 is referred to as the lower distribution plate opening ratio A_{b}. The opening ratio A_{b} of the lower distribution plate may be more than 40%, 45 to 60%, or 50 to 60%.

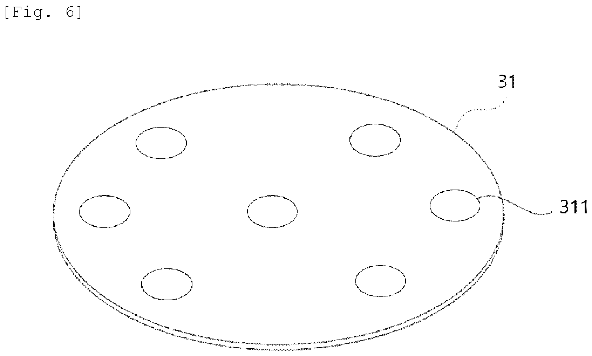

Referring to Fig. 6, the middle distribution plate 31 may have the plurality of middle distribution plate openings 311. The percentage of the total area of the middle distribution plate openings 311 to the total area of the middle distribution plate 31 is referred to as the middle distribution plate opening ratio Aₘ. The opening ratio Aₘ of the middle distribution plate may be 20 to 40%, 25 to 35%, or 30 to 35%.

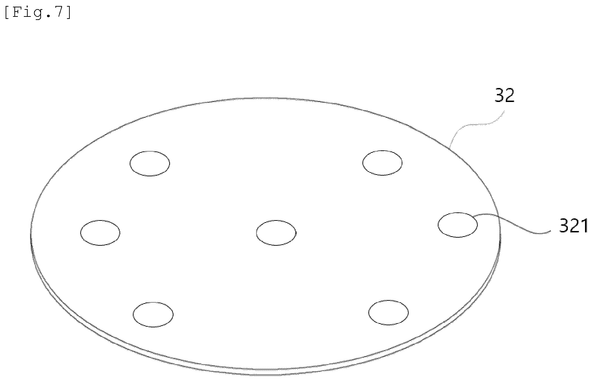

Referring to Fig. 7, the upper distribution plate 32 may have the plurality of upper distribution plate openings 321. The percentage of the total area of the upper distribution plate openings 321 to the total area of the upper distribution plate 32 is referred to as the upper distribution plate opening ratio Aₜ. The opening ratio Aₜ of the upper distribution plate may be less than 20%, 5 to 20%, or 10 to 20%.

In addition, a ratio of the middle distribution plate opening ratio Aₘ to the lower distribution plate opening ratio A_{b} may be less than 1, 0.3 to 0.8, or 0.4 to 0.7.

In addition, a ratio of the upper distribution plate opening ratio Aₜ to the lower distribution plate opening ratio A_{b} may be less than 1, 0.1 to 0.5, or 0.2 to 0.4.

In addition, a ratio of the upper distribution plate opening ratio Aₜ to the middle distribution plate opening ratio Aₘ may be less than 1, 0.3 to 0.8, or 0.4 to 0.7.

The lower distribution plate openings 301, the middle distribution plate openings 311, and the upper distribution plate openings 321 may have the same or different diameters. For example, a diameter l_{b} of the lower distribution plate opening 301, a diameter lₘ of the middle distribution plate opening 311, and a diameter lₜ of the upper distribution plate opening 321 may satisfy l_{b} ≥ lₘ ≥ lₜ or l_{b} > lₘ > lₜ. The lower distribution plate opening 301, the middle distribution plate opening 311, and the upper distribution plate opening 321 may have diameters whose sizes increase sequentially toward the lower part, thereby preventing a backflow of the mixed gas, and assisting the mixed gas to easily flow from the upper part to the lower part. In addition, the embodiments of the present disclosure may provide the gas distribution system and the ammonia synthesis system using the same, which provides a more uniform flow rate distribution of the mixed gas at the front end of the catalyst bed when the flow rate is low. Embodiments of the gas distribution system and the ammonia synthesis system using the same also minimize the load on the gas supply to the catalyst bed when the flow rate is high, thereby enabling uniform and efficient reaction in the catalyst bed or beds.

The gas distribution system according to an embodiment of the present disclosure may cope with the change in the flow rate of the raw material, such as hydrogen, that occurs during the production cycle. For example, depending on whether the raw material feed has a low flow rate, an average flow rate, or a high flow rate, the mixed gas supply line and the distribution device in operation may be changed, thus also changing the number of distribution plates through which the mixed gas passes.

The gas distribution system according to an embodiment of the present disclosure may be operated at the high flow rate by feeding the mixed gas through the lower mixed gas supply line 50 disposed at the lowermost part, and using only the lower distribution plate 30 having the largest opening ratio without using another distribution plate. The gas distribution system according to an embodiment may allow the mixed gas to pass through only the lower distribution plate 30 disposed at the lowermost part among the distribution plates and to reach the catalyst bed 20 to thus minimize the load on the gas supply to the catalyst bed, thereby achieving an ammonia synthesis system that enables uniform and efficient reaction.

The gas distribution system according to still another embodiment of the present disclosure may be operated at the average flow rate by feeding the mixed gas through the middle mixed gas supply line 51 disposed in the middle, and using only the lower distribution plate 30 and the middle distribution plate 31 without using the upper distribution plate 32.

The gas distribution system according to yet another embodiment of the present disclosure may be operated at the low flow rate of the raw material by feeding the mixed gas through the mixed gas supply line 52 disposed at the uppermost part, and using all of the lower distribution plate 30, the middle distribution plate 31, and the upper distribution plate 32. The gas distribution system according to an embodiment may allow the mixed gas to first pass through the upper distribution plate 32 disposed at the top, and then sequentially pass through the middle distribution plate 31 and then, the lower distribution plate 30, and reach the catalyst bed 20 disposed at the lowermost part to thus enable the uniform distribution of the mixed gas, thereby improving the distribution performance of the mixed gas at the front end of the catalyst bed. Accordingly, the ammonia synthesis system according to an embodiment may effectively increase the catalyst replacement cycle by enhancing a more uniform utilization of the catalyst in each section of each catalyst bed during the operation.

In an embodiment according to the present disclosure, the mixed gas may include at least one selected from the group consisting of hydrogen and nitrogen.

Hydrogen may be produced by a device powered by renewable energy. For example, hydrogen may be produced by a water electrolyzer powered using renewable energy, such as, for example, solar and wind energy.

Renewable energy may include at least one selected from the group consisting of solar energy, photovoltaic energy, bioenergy, wind energy, hydroelectric energy, geothermal energy, ocean energy, and waste energy. Renewable energy shows temporal variability. For example, solar energy is unable to be used at night. Therefore, when hydrogen is produced using the device powered by renewable energy, the ammonia synthesis system is unable to be always operated at the constant flow rate. The ammonia synthesis system of the present disclosure addresses this issue and can operate effciently against changes in the raw material flow rate that occurs during the production cycle due to the temporal variability of renewable energy.

In addition, the mixed gas supplied from the mixed gas supply line 50, 51, or 52 may have a low temperature. Therefore, the mixed gas supplied from the mixed gas supply line 50, 51, or 52 may function as a cooling mixed gas, and may also function as a way of cooling the mixed gas flowing in the ammonia synthesis system.

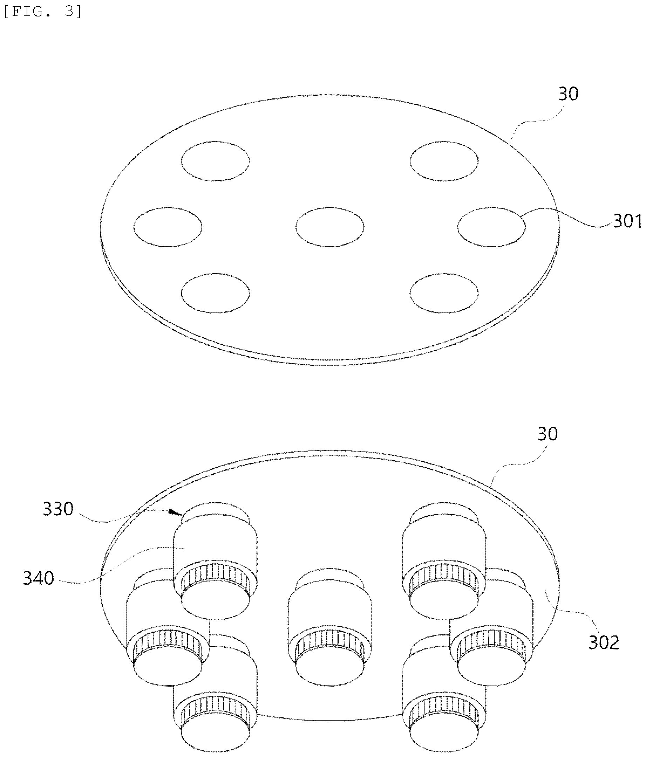

The gas distribution system according to an embodiment of the present disclosure may further include a plurality of mixed gas flow pipes 330 which are fixed to a lower surface 302 of each of the three or more distribution plates 30, 31, and 32 and through which the mixed gas flows. The gas distribution system may further include the mixed gas flow pipe, thereby maintaining the uniform flow rate distribution at the front end of the catalyst bed included in the ammonia synthesis reactor even when the flow rate of the fed raw material such as hydrogen is reduced. FIG. 3 shows a schematic view of the lower distribution plate among the distribution plates. This schematic view is not limited to the lower distribution plate, and may also represent the middle distribution plate and/or the upper distribution plate.

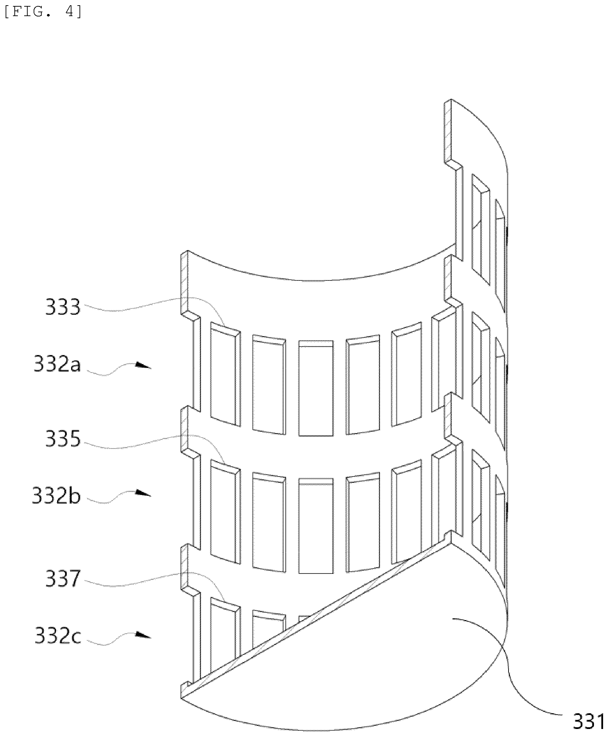

Referring to FIGS. 3 to 5, the mixed gas flow pipe 330 may have a bottom surface 331 and a side surface 332 (332a, 332b, and 332c) connecting the bottom surface 331 with the distribution plate 30. The bottom surface 331 may be a surface that is located at the bottom of the the mixed gas flow pipe (330) and impermeable to the mixed gas. The side surface 332 (332a, 332b, and 332c) may be a surface that is located at the side of the the mixed gas flow pipe (330) and impermeable to the mixed gas. The bottom surface 331 may be a bottom plate that is impermeable to the mixed gas.

A plurality of upper apertures 333 may be formed in a side surface of an upper part 332a of the mixed gas flow pipe 330 spaced apart from each other along a circumference of the upper part 332a of the mixed gas flow pipe 330, a plurality of middle apertures 335 may be formed in a side surface of a middle part 332b of the mixed gas flow pipe 330 spaced apart from each other along the circumference of the middle part 332b of the mixed gas flow pipe 330, and a plurality of lower apertures 337 may be formed in a side surface of a lower part 332c of the mixed gas flow pipe 330 spaced apart from each other along the circumference of the lower part 332c of the mixed gas flow pipe 330. A flow of the mixed gas may be formed through the upper aperture 333, the middle aperture 335, and the lower aperture 337. The mixed gas flow pipe 330 may include a side cover 340 surrounding at least some regions of the side surface of the mixed gas flow pipe 330 to provide a space for the fluid flowing out of the side surface of the mixed gas flow pipe 330 after passing through the upper aperture 333 to be guided toward the middle aperture 335. The side cover 340 may surround at least one selected from the group consisting of the upper and middle parts of the side surface of the mixed gas flow pipe 330.

The side cover 340 may cause the fluid flowing out of the side surface of the mixed gas flow pipe 330 after passing through the upper apertures 333 to be guided toward the middle apertures 335. This configuration may form a flow in which the fluid is moved to the outside of the side surface of the mixed gas flow pipe 330 and then moved back to the inside of the side surface. Through this meander-shape flow path, the fluids may be mixed more effectively and smoothly with each other. When the fluid is better mixed, it is highly beneficial, because it can increase the reaction rate and overall economic efficiency from improvement of catalyst utilization and reduction of catalyst hot spots.

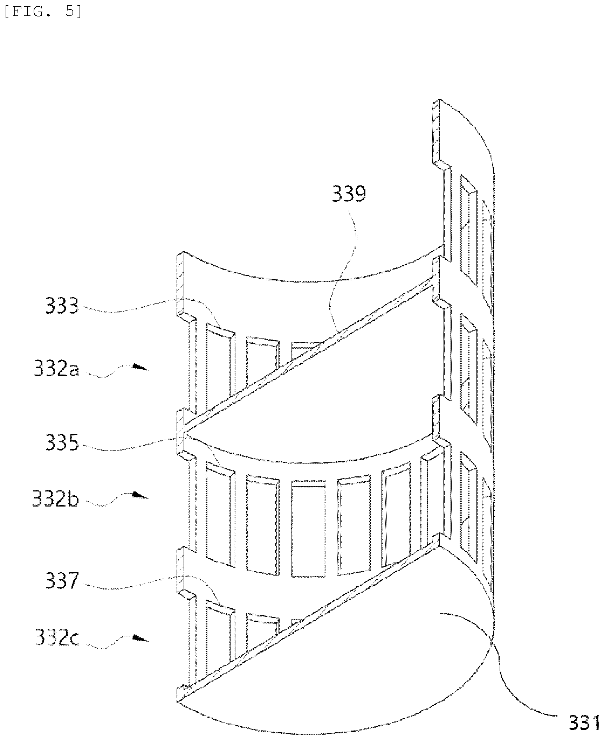

Referring to FIG. 5, the mixed gas flow pipe 330 may further include a separator plate 339 dividing the upper and middle parts of the mixed gas flow pipe 330 from each other. The separator plate 339 may completely separate the upper and middle parts of the mixed gas flow pipe 330 from each other to prevent the fluid from moving inside the mixed gas flow pipe 330. More specifically, the separator plate 339 forces the fluid flow of the mixed gas which enters a mixed gas flow pipe 330 to exit the upper part 332a of the mixed gas flow pipe 330 through the upper apertures 333 into the side space created by the side cover 340 and then back into the middle part 332b of the mixed gas flow pipe through the middle apertures. Therefore, the fluid flowing into the upper part 332a of the mixed gas flow pipe 330 may flow out through the upper apertures 333 into the space between the mixed gas flow pipe 330 and the side cover 340 rather than descending directly to the middle part 332b, by blocking the flow with the separator plate 339. The fluid in the space may then flow into the mixed gas flow pipe through the middle apertures 335, descend downwards, and flow out of the mixed gas flow pipe 330 through the lower apertures 337. The fluid in the lower part of the mixed gas flow pipe 330 may not exit via the bottom surface 331 of the mixed gas flow pipe 330 and is forced to exit via the lower apertures 337. As described above, the fluid may form the flow in which the fluid flows out of the mixed gas flow pipe 330, flows back into the inside of the pipe, and flows out of the pipe again, thereby facilitating to mix the fluids more smoothly, and maintaining the uniform flow rate distribution at the front end of the catalyst bed.

In an embodiment according to the present disclosure, the mixed gas supply line 50, 51, and 52 and the distribution device 40, 41, or 42 may be disposed upstream from each of the distribution plate 30, 31, and 32. For example, the lower mixed gas supply line 50 and the lower distribution device 40 may be disposed upstream from the lower distribution plate 30 and downstream from the middle distribution plate 31, that is, between the lower distribution plate 30 and the middle distribution plate 31; the middle mixed gas supply line 51 and the middle distribution device 41 may be disposed upstream from the middle distribution plate 31 and downstream from the upper distribution plate 32, that is, between the middle distribution plate 31 and the upper distribution plate 32; and the upper mixed gas supply line 52 and the upper distribution device 42 may be disposed upstream from the upper distribution plate 32.

In an embodiment according to the present disclosure, each of the mixed gas supply lines 50, 51, and 52 may include a flow regulating device. The flow regulating device may enable the flow rate of the mixed gas to be controlled independently in each of the mixed gas supply lines. For example, the flow regulating device may independently regulate the flow rate of the mixed gas flowing through each of the mixed gas supply lines for the flow rate of the mixed gas entering the distribution device to be maintained within a desired flow rate range. The flow regulating device may be a flow regulating valve.

In an embodiment according to the present disclosure, each of the mixed gas supply lines 50, 51, and 52 may branch from one main supply line. Alternatively, each of the mixed gas supply lines 50, 51, and 52 may receive at least one gas selected from the group consisting of nitrogen and hydrogen from each of individual supply lines.

In an embodiment according to the present disclosure, the distribution device 40, 41, or 42 may have a disk shape. In another embodiment according to the present disclosure, the distribution device 40, 41, or 42 may have a toroidal shape. However, the embodiments are not limited to these shapes only of the distribution device, and generally any suitable distribution device may be used including any suitable conventional gas distribution device.

The gas distribution system according to an embodiment of the present disclosure may further include a microwave heating device 60 for emitting microwaves to the catalyst bed. The gas distribution system may include the microwave heating device 60 to thus enable a temperature in the central and outer parts of the catalyst bed to be uniform at the beginning of its operation, thereby improving an ammonia synthesis yield. For example, the microwave heating device may enable the temperature in the central and outer parts of the catalyst bed to be uniform by emitting the microwaves to the catalyst bed at the beginning of the operation. In addition, the microwave heating device may improve the ammonia synthesis yield at the beginning of the operation by preheating the catalyst bed that is not sufficiently preheated at the beginning of the operation.

One or more, two or more, three or more, four or more, five or more, or eight or more microwave heating devices may be installed on each catalyst bed, and the number of microwave heating devices is not limited thereto. The number of the microwave heating devices may increase based on a size of the reactor, and an installation location of the microwave heating device may be adjusted for efficient microwave emission.

The ammonia synthesis system may further include a microwave guide. The microwave guide may enable the microwaves emitted by the microwave heating device to reach the catalyst bed more efficiently. The shape or installation location of the guide may be changed based on a microwave waveform.

The gas distribution system according to an embodiment of the present disclosure may further include a backflow prevention plate disposed downstream of each of the distribution plates. Each of the backflow prevention plates may include a plurality of openings, and each of the plurality of openings included in each of the backflow prevention plates may have a backflow prevention cap selectively opened based on a flow direction of the gas. The gas distribution system according to an embodiment may include the backflow prevention plate including the backflow prevention cap, thereby preventing the backflow of the mixed gas to the middle distribution plate when the mixed gas is fed through the mixed gas supply line disposed at the bottom for the gas to pass through only the lower distribution plate.

The backflow prevention cap may be coupled to a hinge disposed at a position on each circumference part of the plurality of openings formed in each of the backflow prevention plates. When the mixed gas flows from the upstream to downstream of the backflow prevention plate, the backflow prevention cap may be maintained to be opened, and the mixed gas may thus flow normally. When the mixed gas is to flow from the downstream to upstream of the backflow prevention plate, the backflow prevention cap may be closed by the flow of the mixed gas flowing from the downstream to the upstream. By this principle, the backflow prevention plate according to the present disclosure may prevent the backflow of the mixed gas. Here, a coupling part of the hinge that is coupled to the hinge may include a spring to apply an elastic force in a direction in which the backflow prevention cap approaches the distribution plate.

The gas distribution system according to an embodiment of the present disclosure may further include a heat exchanger disposed downstream from each of the two or more catalyst beds to remove heat from an effluent of the catalyst bed. The heat exchanger may surround the catalyst bed or its surroundings. The gas distribution system may include an additional heat removal means other than the supply of the cooling mixed gas by further including the heat exchanger. This configuration may enable the flexible operation of the ammonia synthesis system.

The embodiments of the present disclosure may provide the ammonia synthesis system 2 using the gas distribution system 1 described above. The ammonia synthesis system may cope with the change in the flow rate that occurs during the production cycle and increase the replacement cycle of the catalyst bed by maintaining the uniform flow rate distribution at the front end of the catalyst bed when the flow rate of the fed raw material, such as hydrogen, is reduced. Alternatively, the embodiments of the present disclosure may provide the gas distribution system and the ammonia synthesis system using the same which may enable the uniform and efficient reaction by minimizing the load on the gas supply to the catalyst bed included in the ammonia synthesis reactor even when the flow rate of the fed raw material, such as hydrogen, is increased. In addition, the gas distribution system may be used to improve the ammonia synthesis yield and achieve an eco-friendly ammonia synthesis system.

In the ammonia synthesis system according to an embodiment of the present disclosure, ammonia may be synthesized at 1 to 500 bar or 10 to 300 bar.

In addition, in the ammonia synthesis system according to an embodiment of the present disclosure, ammonia may be synthesized at 100 to 800°**C** or 200 to 700°C.

As set forth above, the gas distribution system and the ammonia synthesis system using the same according to an embodiment of the present disclosure may cope with the change in the flow rate that occurs during the production cycle.

The gas distribution system and the ammonia synthesis system using the same according to another embodiment of the present disclosure may maintain the uniform flow rate distribution at the front end of the catalyst bed included in the ammonia synthesis reactor even when the flow rate of the raw material, such as hydrogen, fed into the ammonia synthesis system is decreased.

The gas distribution system and the ammonia synthesis system using the same according to another embodiment of the present disclosure may enable the uniform and efficient reaction by minimizing the load on the gas supply to the catalyst bed included in the ammonia synthesis reactor even when the flow rate of the raw material, such as hydrogen, is fed into the ammonia synthesis system is increased.

The ammonia synthesis system according to still another embodiment of the present disclosure may improve the ammonia synthesis yield by enabling the temperature between the central and outer parts of the catalyst bed to be uniform at the beginning of its operation.

The ammonia synthesis system according to an embodiment of the present disclosure may improve the ammonia synthesis yield at the beginning of its operation by preheating the catalyst bed at the beginning of its operation.

The ammonia synthesis system according to an embodiment of the present disclosure may synthesize ammonia in an eco-friendly manner.

The embodiments described above are only examples to which a principle of the present disclosure is applied, and may further include other configurations within the scope of the present.

## Claims

1. A gas distribution system (1) for an ammonia synthesis system (2), the gas distribution system (1) comprising:
three or more distribution plates (30, 31, 32) disposed upstream from a catalyst bed (20) disposed inside an ammonia synthesis reactor (10) of the ammonia synthesis system (2);
three or more distribution devices (40, 41, 42), each disposed upstream from a corresponding one of the distribution plates (30, 31, 32) for distributing a mixed gas to the distribution plates (30, 31, 32); and
three or more mixed gas supply lines (50, 51, 52), each arranged to supply the mixed gas to a respective one of the distribution devices(40, 41, 42),
wherein the three or more distribution plates include a lower distribution plate (30), a middle distribution plate(31), and an upper distribution plate (32), which are distinguished from one another based on their arrangement height, or based on their longitudinal position,
wherein each of the lower distribution plate (30), the middle distribution plate (31), and the upper distribution plate (32) has a plurality of openings formed independently of each other,
wherein when a percentage of a total area of the openings (301, 311, 321) to a total area of each distribution plate (30, 31, 32) is referred to as an opening ratio, and
wherein an opening ratio A_{b} of the lower distribution plate (30), an opening ratio Aₘ of the middle distribution plate (31), and an opening ratio At of the upper distribution plate (32) satisfy the relationship A_{b} > Aₘ > Aₜ.

2. The system of claim 1, wherein the opening ratio A_{b} of the lower distribution plate (30) is more than 40%,
and/or wherein the opening ratio Aₘ of the middle distribution plate (31) is 20% to 40%,
and/or wherein the opening ratio Aₜ of the upper distribution plate (32) is less than 20%.

3. The system of claim 1 or 2, further comprising a plurality of mixed gas flow pipes (330) which are fixed to a lower surface (302) of at least one of the distribution plates and through which the mixed gas flows.

4. The system of claim 3, wherein:
each of the mixed gas flow pipes (330) has a bottom surface (331) and a side surface (332) connecting the bottom surface (331) with the distribution plate (30, 31, 32),
a plurality of upper apertures (333) are formed in a side surface of an upper part (332a) of the mixed gas flow pipe (330) spaced apart from each other along a circumference of the pipe (330),
a plurality of middle apertures (335) are formed in a side surface of a middle part (332b) of the mixed gas flow pipe (330) spaced apart from each other along the circumference,
a plurality of lower apertures (337) are formed in a side surface of a lower part (332c) of the mixed gas flow pipe (330) spaced apart from each other along the circumference,
optionally wherein the mixed gas flow pipe (330) includes a side cover (340) surrounding at least some regions of the side surface (332) of the mixed gas flow pipe (330) to provide a space for a fluid flowing out of the side surface (332) of the mixed gas flow pipe after passing through the upper aperture (333) to be guided toward the middle aperture (335),
and/or optionally wherein the mixed gas flow pipe (330) further includes a separator plate (339) dividing the upper (332a) and middle parts (332b) of the mixed gas flow pipe (330) from each other.

5. The system of any one of claims 1 to 4, further comprising at least one microwave heating device (60) for emitting microwaves to the catalyst bed (20),
optionally further comprising a microwave guide (601) for guiding the microwave to reach the catalyst bed.

6. The system of any one of claims 1 to 5, wherein each of the mixed gas supply lines (50, 51, 52) includes a flow regulating device.

7. The system of any one of claims 1 to 6, further comprising a heat exchanger disposed downstream from the catalyst bed (20) to remove heat from an effluent of the catalyst bed (20).

8. The system of any one of claims 1 to 7, wherein the distribution device (40, 41, 42) has a disk shape or a toroidal shape.

9. An ammonia synthesis system (2) including the gas distribution system (1) according to any one of claims 1 to 10.

10. The system of claim 9, further including the ammonia synthesis reactor (10).

11. A method for synthesizing ammonia using the ammonia synthesis system according to claim 9 or 10.

12. The method of claim 11,
wherein ammonia is synthesized at 10 to 300 bar, and/or at 200 to 700°C.

13. The method of claim 11 or 12,
wherein the catalyst bed (20) is preheated before the beginning of the system operation.

14. The method of any one of claims 11 to 13,
wherein a raw material is fed through the lower mixed gas supply line (50), when the raw material fed into the system has a flow rate more than twice (200%) of the annual average production flow rate (100%), and
wherein a raw material is fed through the upper mixed gas supply line (52) to first pass through the upper distribution plate (32) disposed at the top of the reactor (10), when the flow rate of the raw material is less than half (50%) of an annual average production flow rate (100%).
